# EUROPÄISCHE PATENTANMELDUNG

(11) **EP 0 947 970 A1**
(43) Veröffentlichungstag der Anmeldung: **06.10.1999**
(21) Anmeldenummer: 98104922.4
(22) Anmeldetag: 18.03.1998
(51) Int. Cl.: G09B 29/00, G09B 29/10, G08G 1/0969, G01C 21/20

(54) **Geografische Referenzierung von Netzwerken des öffentlichen Verkehrs**

(71) Anmelder: Mentz Datenverarbeitung GmbH, 81675 München (DE)
(72) Erfinder: Mentz, Hans-Joachim, Dr., 85591 Vaterstetten (DE); Retter, Kurt, 70374 Stuttgart (DE); Kamenicek, Ivo, 81737 München (DE)
(74) Vertreter: Schoppe, Fritz, Dipl.-Ing.

(57) **Zusammenfassung**

Bei einem Verfahren zum Erzeugen von einer integrierten Darstellung von Verkehrswegen und Haltestellen (20a, 20b) für öffentliche Verkehrsmittel wird auf eine erste Datenmenge zurückgegriffen, die eine Beschreibung geografischer Verkehrswege in Form von Segementen (10, 12, 14, 16, 18) liefert. Aus einer zweiten Datenmenge, die in Form einer tabellarischen Darstellung von Haltestellen (20a, 20b) für öffentliche Verkehrsmittel vorliegt, wird eine Haltestelle (20a) ausgewählt, wobei das Segment (12) identifiziert wird, dem die ausgewählte Haltestelle (20a) zuzuordnen ist. Dann kann der Abstand der ausgewählten Haltestelle von einem Endpunkt (12a, 12b) des identifizierten Segments (12) berechnet werden. Nun wird eine Referenz der ausgewählten Haltestelle (20a) auf das identifizierte Segment (12) in eine dritte Datenmenge eingetragen, wobei die Referenz eine Segmentkennung (ID) und den Abstand der identifizierten Haltestelle (20a) von einem Endpunkt (12a, 12b) des identifizierten Segments (12) aufweist. Auf der Basis der dritten Datenmenge können nun auf flexible Art und Weise z. B. Liniennetzpläne erstellt, Betriebsleistungen berechnet, unterschiedliche öffentliche Netze abgeglichen und verknüpft, sowie integrierte Fahrplanauskünfte erteilt werden.

## Beschreibung

Die vorliegende Erfindung bezieht sich allgemein auf den Verkehr und insbesondere auf die Integration von Individualverkehr und öffentlichem Verkehr.

Bisher existieren völlig unterschiedliche Darstellungen für den Individualverkehr und den öffentlichen Verkehr. Die Netze des Individualverkehrs liegen allgemein in objektorientierten Datenmodellen vor. Ein bekanntes Beispiel dafür ist das GDF-Format (GDF = Geographic Datafile), welches weltweit normiert ist.

Ein objektorientiertes Datenmodell für den Individualverkehr beschreibt Wegenetze. Ein Weg, beispielsweise eine Straße, wird dabei in Segmente unterteilt, wobei jedem Segment eine Segmentkennung sowie ein Anfangs- und Endpunkt zugeordnet ist. Ein Segment kann ferner je nach Ausgestaltung eine Vielzahl weiterer Informationen neben Kennung und Anfangs- und Endpunkt haben. Eine solche weitere Information ist beispielsweise die Geometrie des Segments. Ist beispielsweise eine ganze Serpentinenstraße durch ein einziges Segment beschrieben, was der Fall sein wird, wenn sich das Segement in einem relativ dünn besiedelten Gebiet befindet, so umfaßt das Segment typischerveise eine Vielzahl von Punkten, die zu einer Polygonpunktfolge verbunden werden können. So ist es beispielsweise denkbar, daS auf einer geraden Straße die einzelnen Polygonpunkte relativ weit entfernt angeordnet sind, während in einer Kurve viel mehr Polygonpunkte vorhanden sind, um den geometrischen Verlauf der Kurve durch einen Polygonzug, der die Punkte verbindet, hinreichend nachbilden zu können.

Im städtischen Bereich dagegen kann sich ein Segment lediglich von einer Einmündung bis zu einer nächsten Einmündung erstrecken, oder auch von einer bestimmten Hausnummer zu einer höheren Hausnummer. Ein solches kurzes Segment wird typischerweise wesentlich weniger Polygonpunkte umfassen, bzw. genauso viele Polygonpunkte wie ein langes Segment, um besonders in dicht besiedelten städtischen Bereichen die Informationsdichte an die Gegebenheiten anpassen zu können.

Wichtig ist, daS die geografischen Informationen, d. h. die geografischen Längen- und Breiten-Koordinaten, nicht in der Segmentkennung untergebracht sind, sondern in den einzelnen Punkten der Polygonfolge. Dies bedeutet, daß bei einer Aktualisierung der Wegenetzdaten die Segmentkennungen im wesentlichen unverändert bleiben, daß aber die Anzahl der Polygonpunkte in dem Segment veränderlich ist, um einen gegebenen Wegenetzabschnitt mit höherer Längenauflösung erfassen zu können, bzw. denselben beispielsweise um Höheninformationen ergänzen zu können. Die Segmentanfangs- und Endpunkte sowie die Segmentkennung bleiben jedoch unabhängig von der aktualisierten Datenmenge gleich, d. h. sie sind permanent.

Ein Segment kann ferner eine reichhaltige Attributierung umfassen, wie z. B. die erlaubte Geschwindigkeit in dem Segment, die erlaubten Lasten in dem Segment, wenn das Segment beispielsweise eine Brücke beschreibt, die erlaubte Höhe oder Breite eines Fahrzeugs, wenn das Segment einen Tunnel beschreibt, den Typ des Verkehrswegs, der durch das Segment beschrieben ist, d. h. ob es sich um eine Straße, eine Schiene, einen Radweg, einen Fußweg oder auch um einen Schiffahrtsweg handelt. Weitere Attribute für ein Straßensegment sind beispielsweise Parkinformationen oder Fahrtrichtungsinformationen, d. h. ob es sich um eine Einbahnstraße handelt oder nicht.

Lieferanten für eine solche objektorientierte Datenmenge, die Wegenetze beschreibt, sind beispielsweise die Firmen NavTech (Navigation Technologies) oder die Firma TeleAtlas.

Daneben haben sich auch in den Vermessungsämtern der Städte Datenbestände entwickelt, die jedoch oft nicht zu anderen kompatibel sind und zudem an den Gemeindegrenzen enden. NavTech-Daten weisen in Deutschland mittlerweile eine große Flächendeckung auf, wobei eine Reihe von Bundesländern und praktisch alle Ballungsgebiete vollständig abgedeckt sind. NavTech-Daten für Individualverkehrswegenetze existieren weltweit, wobei sich auch die GPS-Navigation auf diesen Datenbestand bezieht.

Für Netze des öffentlichen Verkehrs existieren dagegen nur Netzbeschreibungen mit außerordentlich geringem geografischen Bezug. Ein Beispiel dafür ist das VDV-Datenmodell. Dort existieren für einzelne Haltepositionen geografische Koordinaten. Es kann daher festgestellt werden, daß üblicherweise im öffentlichen Verkehr eigene Planungssysteme existieren, die völlig unabhängig von den Individualverkehrsdaten sind, wobei im öffentlichen Verkehr in der Regel Tabellen beispielsweise in Form eines Fahrtplanbuchs und grafische Fahrpläne existieren, oder Aushängen, wie sie im allgemeinen an Bahnhöfen des öffentlichen Nahverkehrs zu finden sind.

Diese parallele Existenz von Fahrwegnetzen des Individualverkehrs und Netzen des öffentlichen Verkehrs birgt in einer Zeit, in der eine optimale Nutzung beider Verkehrssysteme nicht nur erstrebenswert ist, sondern für Ballungszentren sogar lebenswichtig ist, mehrere Nachteile.

Ein erster Schritt zur Integration beider Systeme besteht darin, die öffentlichen Verkehrsnetze in das allgemeine Wegenetz zu übertragen. Hierfür existieren zwar grafische Darstellungen in Form von Stadtplänen, in denen die öffentlichen Verkehrswege eingezeichnet sind, oder von Liniennetzplänen. Hierbei handelt es sich jedoch nur um reine Bilder ohne Instruktionsmöglichkeit, weshalb eine moderne automatische Datenverarbeitung mit diesen Liniengrafiken unmöglich ist, d. h. es wird immer der menschliche Verstand benötigt, um diese Pläne interpretieren zu können. Zudem müssen diese Pläne immer im wesentlichen manuell erstellt werden bzw. bei einer Änderung manuell neu erstellt werden, ohne daß auf die bereits bestehenden Daten für die Wegenetze des Individualverkehrs und die Netze des öffentlichen Verkehrs zurückgegriffen werden kann.

Ein weiterer Nachteil der beschriebenen Parallelexistenz besteht darin, daß beispielsweise für die Berechnung von Betriebsleistungen getrennte Vermessungen benutzt werden. So bedient beispielsweise ein privater Busunternehmer eine öffentliche Buslinie. Sein Entgelt wird dabei anhand der gefahrenen Kilometer abgerechnet. Um zu ermitteln, wie lang eine Verkehrslinie tatsächlich ist, wird üblicherweise vor der ersten Fahrt mittels eines Vermessungsrads die Strecke abgefahren und die Länge dann abgelesen. Ändert sich die Streckenführung nur geringfügig, so muß wieder eine aufwendige manuelle Vermessung durchgeführt werden, um die Fahrzeugkilometer korrekt abrechnen zu können.

Ein weiterer wesentlicher Nachteil der beschriebenen Parallelexistenz von öffentlichen Verkehrsnetzen und Individualverkehrswegenetzen besteht darin, daß multimodale Fahrplanauskünfte, d. h. Fahrplanauskünfte, die eine Kette von Wegen des Individualverkehrs und des öffentlichen Verkehrs darstellen, derzeit gar nicht existieren, oder in getrennten Netzen berechnet und grob zusammengesetzt werden. Ein Verkehrsteilnehmer, der den öffentlichen Verkehr nutzen möchte, muß aber zunächst einen Teil seines Weges in einem Individualverkehr-Wegenetz zurücklegen, sei es als Fußgänger, als Radfahrer oder im Auto, bevor er in den öffentlichen Verkehr einsteigen kann. Zudem muß der Verkehrsteilnehmer sein Individualverkehrsmittel, d. h. das Fahrrad oder das Auto bzw. Motorrad, auf einer Parkfläche abstellen können, um das öffentliche Verkehrsmittel benutzen zu können. Aufgrund der getrennten Existenz der beiden Netze ist es heute nicht möglich, einen optimalen Bahnhof, bzw. eine optimale Haltestelle, empfehlen zu können, die der Verkehrsteilnehmer gut erreichen kann, und wo er auch noch sein Fahrzeug abstellen kann. Der Verkehrsteilnehmer wird daher wieder auf einen Stadtplan oder ähnliches zurückgreifen müssen, um sich mühevoll seinen Weg selbst zusammmen zu suchen. Üblicherweise sind zudem auch Stadtpläne nicht so genau, um die vorhandenen Bahnhofseingänge zu spezifizieren, weshalb ein Verkehrsteilnehmer erst vor Ort den korrekten Bahnhofseingang suchen muß. Er kann also erst vor Ort feststellen, wo die tatsächlichen Übergangspunkte zwischen dem öffentlichen Verkehr und dem Individualverkehr sind. Daher ist es äußerst problematisch, mit zusammengesetzten Fahrplanauskünften einem Benutzer eine für ihn optimale Haltestelle zu empfehlen.

Die Aufgabe der vorliegenden Erfindung besteht darin, ein Konzept zu schaffen, das die effiziente Lieferung von Verkehrsinformationen sowohl bezüglich des Individualverkehrs als auch des öffentlichen Verkehrs ermöglicht.

Diese Aufgabe wird durch ein Verfahren zum Erzeugen einer integrierten Darstellung von Verkehrswegen und Haltestellen für öffentliche Verkehrsmittel gemäß Anspruch 1 sowie durch ein Verfahren zum Erzeugen von Verkehrsinformationen gemäß Anspruch 11 gelöst.

Der vorliegenden Erfindung liegt die Erkenntnis zugrunde, daß eine Integration der bereits vorhandenen Wegenetzdaten für den Individualverkehr mit den ebenfalls bestehenden Daten für den öffentlichen Verkehr benötigt wird, welche eine moderne Datenverarbeitung ermöglicht. Durch das Verfahren zum Erzeugen einer integrierten Darstellung gemäß einem ersten Aspekt der vorliegenden Erfindung wird eine Datenmenge erzeugt, die neben den Haltestellen für die öffentlichen Verkehrsmittel Referenzen auf Segmente von Individualverkehrswegen umfaßt. Eine solche Referenz enthält zumindest das bestimmte Segment, in dem eine Haltestelle angeordnet ist, bzw. dem eine Haltestelle zugeordnet ist, sowie den Abstand der Haltestelle zu einem Segmentendpunkt.

Derartige Referenzen bzw. Verweise schaffen eine einfache und effiziente Möglichkeit, um einen durch die moderne Datenverarbeitung handhabbaren Übergang zwischen den beiden Netzen zu ermöglichen, um beispielsweise Datenbankabfragen durchführen zu können oder Wegoptimierungen unter Verwendung beider Netze berechnen zu können. Durch die Tatsache, daß die einer Haltestelle zugeordnete Referenz auf geografische Verkehrswege des Individualverkehrs permanente Segmentkennungen und keine geografischen Daten umfaßt, ist die kombinierte Darstellung der Netze, d. h. die geografische Referenzierung der Netzwerke des öffentlichen Verkehrs auf die Wegenetze des Individualverkehrs von den Individualverkehrsdaten relativ unabhängig, da über mehrere Aktualisierungen oder Updates der Individualverkehrsdaten die Segmentkennungen und die Segmentanfangs- und -endpunkte unverändert bleiben. So können sich über mehrere Updates zwar die Punkte der Polygonpunktfolge, die geografische Koordinaten aufweisen, verändern, die Referenzen der Haltestellen auf das Segment bleiben davon jedoch unberührt.

Durch das Verfahren zum Erzeugen von Verkehrsinformationen gemäß einem zweiten Aspekt der vorliegenden Erfindung wird die integrierte Darstellung ausgewertet, um Verkehrsinformationen über einen Weg zu erhalten, der einen geografischen Verkehrsweg und zumindest eine Haltestelle für öffentliche Verkehrsmittel umfaßt, wobei bei einem Übergang zwischen dem geografischen Verkehrsweg und der zumindest einen Haltestelle die der zumindest einen Haltestelle zugeordnete Referenz verwendet wird. Die Referenzierung erlaubt somit unter Verwendung moderner Datenverarbeitungsmittel flexibel Liniennetzpläne zu erstellen, Betriebsleistungen zu berechnen, verschiedene öffentliche Verkehrsnetze zu verbinden sowie Verkehrsauskünfte auf der Basis der integrierten Darstellung unter Verwendung moderner Routensuchalgorithmen zu erzeugen.

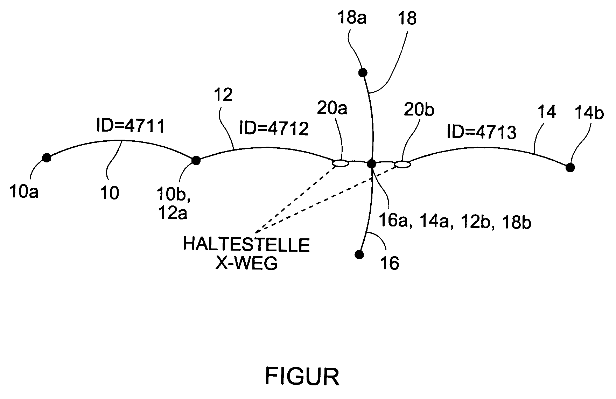

Bevorzugte Ausführungsbeispiele der vorliegenden Erfindung werden nachfolgend bezugnehmend auf die beigefügte Zeichnung detailliert erläutert. Die einzige Figur zeigt:
ein in Segmente unterteiltes Individualverkehrsnetz, in dem sich zwei Haltestellen befinden.

Die einzige Figur zeigt schematisch das der Erfindung zugrunde liegende Konzept. Ein Individualverkehrswegenetz ist durch mehrere Segmente 10 bis 18 dargestellt. Jedes Segment umfaßt grundsätzlich einen Anfangs- und einen Endpunkt, z. B. einen Anfangspunkt 10a und einen Endpunkt 10b am Beispiel des Segments 10 sowie eine Segmentkennung oder Segment-ID. Damit sich ein zusammenhängender Verkehrsweg ergibt, fällt typischerweise der Segmentendpunkt eines Segments mit dem Segmentanfangspunkt des nächsten Segments zusammen. Eine Kreuzung zweier Verkehrswege wird typischerweise an einem Segmentende bzw. -anfang sein, wobei der in der Figur gezeigte Kreuzungspunkt sowohl der Endpunkt 12b des Segments 12 als auch der Endpunkt 18b des Segments 18 als auch der Anfangspunkt 14a des Segments 14 als auch der Anfangspunkt 16a des Segments 16 ist. In dem Bereich des Verkehrswegs, der durch das Segment 12 dargestellt ist, befindet sich ferner eine Halteposition 20a einer Haltestelle mit dem Namen "X-Weg", wobei diese Haltestelle ferner eine zweite Halteposition 20b in dem Segment 14, das die Segmentkennung 4713 aufweist, umfaßt. Hierbei handelt es sich beispielsweise um eine Bushaltestelle, die auf zwei verschiedenen Straßenseiten typischerweise an gegenüberliegenden Einmündungen einer Kreuzung durch zwei in entgegengesetzter Richtung fahrende Busse bedient wird.

Die in der Figur dargestellte Situation würde sich vereinfachen, wenn es sich bei der Buslinie, die die Haltestelle X-Weg aufweist, um einen Kreisverkehr handeln würde, da dann lediglich eine einzige Halteposition 20a vorhanden wäre. Um die Haltestelle X-Weg, die Teil einer Tabelle mit Daten über den öffentlichen Verkehr ist, mit den Verkehrswegedaten in Verbindung zu bringen, d. h. um die Haltestelle auf das Individualverkehrswegenetz zu referenzieren, wird ihr eine Referenz zugeordnet, die bei dem in der Figur gezeigten Beispiel folgendermaßen lauten würde:
X-Weg West ID = 4712 750 Meter vom Anfangsknoten
X-Weg Ost ID = 4713 50 Meter vom Anfangsknoten.

Vorzugsweise wird die Referenz ferner eine Angabe darüber enthalten, auf welcher Straßenseite des Segments 4712 die Haltestelle West 20a bzw. Ost 20b zu liegen kommt. Bei einem Kreisverkehr ist eine derartige Angabe jedoch nicht unbedingt erforderlich.

Komplizierter ist die Situation bei größeren Haltestellen, wenn die Haltestelle für mehrere öffentliche Verkehrsmittel Haltepunkte umfaßt. Erfindungsgemäß wird in jedem Fall ein hierarchisches Haltestellenmodell benutzt. Dabei gliedert sich eine große Haltestelle, wie z. B. ein Bahnhof in folgende Stufen:
- Haltestelle; die Haltestelle ist das Sammelobjekt und der Träger des Namens und verschiedener gemeinsamer Attribute;
- Bereich; ein Bereich ist eine Gliederung der Haltestelle in Gebiete, die durch Fußwege verbunden sind, z. B. Gleishalle, U-Bahnhof, S-Bahnhof, Busbahnhof;
- Steige; ein Steig ist ein Bussteig, ein Bahnsteig oder auch ein Tram-Steig.

Weitere Punkte im Haltestellenmodell sind zusätzliche Übergänge zum Individualverkehr, wie z. B. Eingangs/Ausgangsbereiche großer Umsteigebauwerke, P+R-Plätze und Fahrradabstellanlagen. Diese sind, bekanntermaßen mit den Bereichen der Haltestelle durch Fußwege, Rolltreppen, Aufzüge, usw. verbunden. Die Bereiche spannen also ein Fußwegnetz innerhalb der Haltestelle auf. Dieses Fußwegnetz einer Haltestelle wird durch Kanten beschrieben, wobei den Kanten Merkmale, wie z. B. Treppen, Aufzüge, usw. attributiert werden können. Damit ist es zudem möglich, behindertengerechte Wege in Bahnhöfen sowie von den Bahnhöfen zu Individualverkehrswegen automatisch zu finden bzw. automatisch ausgeben zu können.

Ein solcher sehr komplexer Bahnhof kann aufgrund der Referenzierungstechnik gemäß der vorliegenden Erfindung trotz seiner Komplexität einfach mit dem Individualverkehrswegenetz in Verbindung gebracht werden, da nur die Schnittstellen des Bahnhofs zum Individualverkehr, d. h. die Ausgangs/Eingangs-Bereiche sowie beispielsweise ein P+R-Parkplatz oder eine Fahrradabstellfläche, referenziert zu werden brauchen. Die Referenzierung der Schnittstellenbereiche findet auf genau das Segment eines angrenzenden Individualverkehrswegs statt, das einen Individualverkehrsweg beschreibt, der zum Bahnhof führt. Somit ist automatisch die genaue Lage der Übergangspunkte festgelegt.

Da moderne Straßennetzdaten über permanente Segmentnummern verfügen, d. h. Segmentkennung, die unabhängig von späteren Updates mit z. B. höherer Auflösung konstant bleiben, ergibt sich somit eine dauerhafte Verbindung, die einfach zu erstellen ist, und für die keine hohe Meßgenauigkeit der Halteposition erforderlich ist. Vor allem an den Schnittstellen der Segmente bleibt die Zuordnung immer einfach, wobei wegen des direkten Bezugs keine Abstandsberechnungen auf der Basis geografischer Koordinaten erforderlich ist, da alle Bezüge auf die Segmentanfangs- und -endpunkte ausgerichtet sind, und nicht auf Polygonpunkte innerhalb eines Segments.

Das Verfahren zum Erzeugen einer integrierten Darstellung von Verkehrswegen und Haltestellen für öffentliche Verkehrsmittel wird am besten mittels eines Computerprogramms durchgeführt, welches das Individualverkehrswegenetz als Bestandteil einer Karte am Bildschirm darstellt. Durch Zoomen ist dabei eine beliebige Genauigkeit einstellbar. Durch einen Mausklick auf die entsprechende Position der Straße und durch Eingabe der Haltepositionsidentifikation oder durch Verschieben, z. B. durch drag and drop, der Halteposition auf die Straße läßt sich die Referenzierung automatisch herstellen. Dabei identifiziert das Programm auf der Basis der manuellen Grafikeingabe das Segment, dem die bestimmte Haltestelle zuzuordnen ist. Anschließend wird der Abstand der Haltestelle von einem Endpunkt des Segments berechnet. Schließlich wird eine Referenz der bestimmten Haltestelle auf das identifizierte Segment in eine Datenmenge eingetragen, wobei die Referenz zumindest eine Segmentkennung und den Abstand der identifizierten Haltestelle von einem Endpunkt des bestimmten Segments aufweist. Diese Schritte können wiederholt werden, bis alle gewünschten Haltestellen verarbeitet sind. Es sei darauf hingewiesen, daß eine Haltestelle mehrere Haltepositionen, wie in der Figur gezeigt, bzw. mehrere Eingangs/Ausgangs-Bereiche oder Parkplätze oder ähnliches umfassen kann. In diesem Fall wird das beschriebene Verfahren für jede Halteposition bzw. für jeden Eingangs/Ausgangs-Bereich getrennt durchgeführt.

Vorzugsweise wird die Referenz nicht in die Datenmenge eingetragen, die die Individualverkehrswegenetze beschreibt, da diese als fertige unveränderbare Datenmenge vorliegt. Stattdessen werden die Referenzen in die üblicherweise in Tabellenform vorliegende Datenmenge eingetragen, die die einzelnen Haltestellen bzw. Haltepositionen für öffentliche Verkehrsmittel auflistet.

Zwischen den Haltepositionen befährt ein öffentliches Verkehrsmittel in der Regel eine Folge von Straßen. Dieser Weg wird dadurch beschrieben, daß man der Teilstrecke, d. h. der Verbindung zwischen den beiden Haltestellenpositionen, eine Liste der Segmentnummern beifügt, die zwischen den beiden Punkten durchfahren werden. Diese Liste besteht somit ebenfalls aus geografischen Referenzen oder Verbindungsreferenzen, die jedoch, wenn vollständige segmente durchfahren werden, lediglich die Segmentkennung umfassen müssen, jedoch nicht einen Abstand zu einem Anfangs- oder einem Endpunkt.

Die integrierte Darstellung von Verkehrswegen und Haltestellen für öffentliche Verkehrsmittel, die aufgrund der Referenzen eine flexible und mittels moderner Datenverarbeitungsverfahren bearbeitbare Darstellung ist, erlaubt die Erzeugung einer Vielzahl von Verkehrsinformationen. Zunächst können die geografisch referenzierten öffentlichen Verkehrsnetze zur Darstellung von Linienplänen bzw. zum Drucken von Liniennetzplänen in Papierform verwendet werden. Dabei wird zunächst das Verkehrswegenetz des Individualverkehrs dargestellt, wonach Haltestellen an durch die Referenzen bestimmten Plätzen in die entsprechenden Segmente eingezeichnet werden, woraufhin die Verbindungslinien zwischen den Haltestellen durch Markieren der Segmente zwischen den Haltestellen, auf die durch die Verbindungsreferenzen verwiesen wird, ebenfalls gezeichnet werden können.

Weiterhin ist es nun auf automatische Art und Weise möglich, die Betriebsleistungen, d. h. Fahrtkilometer, einer öffentlichen Verkehrslinie zu ermitteln. Dazu müssen lediglich die Referenzen einer Verkehrslinie, d. h. die Referenzen der Anfangs- und Endhaltestelle, sowie die Verbindungsreferenzen ausgewertet werden, um auf der Basis der Referenzen die den Segmenten zugeordneten Streckendaten auswerten zu können. Zur Betriebsleistungsberechnung genügen die Längendaten, um die gesamte Streckenlänge einer Verkehrslinie zu ermitteln.

Die geografische Referenzierung kann ferner dazu verwendet werden, Haltestellen mehrerer Netzteile in Verbindung zu bringen. So existieren besonders im Regionalverkehr unterschiedliche öffentliche Verkehrsnetze, die oftmals gleiche Haltestellen bedienen. Eine automatische Erfassung ist jedoch bis jetzt schwierig gewesen, da die gleichen Haltestellen in den unterschiedlichen Verkehrsnetzen unterschiedliche Namen haben konnten. Somit war es schwer, einen Abgleich zwischen den beiden Netzen herstellen zu können. Indem jedoch beide öffentlichen Verkehrsnetze auf festgelegte Segmente referenziert sind, ist es nun auf einfache Art und Weise möglich, festzustellen, ob Haltestellen zweier verschiedener öffentlicher Netze in ein und demselben Segment liegen. Ist das Segment jedoch ein ziemlich langes Segment, so muß ferner festgestellt werden, ob der Abstand zwischen den Referenzpunkten relativ kurz ist. Ist der Abstand jedoch kurz, so kann davon ausgegangen werden, daß es sich bei den beiden Haltestellen unterschiedlicher öffentlicher Netze, obwohl sie unterschiedliche Namen tragen, um eine Umsteigemöglichkeit zwischen den beiden oder mehreren öffentlichen Netzen handelt, die einem Benutzer mitgeteilt werden kann, der unter Umständen von einem öffentlichen Netz zu einem anderen wechseln möchte.

Eine wesentliche Nutzung der geografischen Referenzierung besteht ferner in der Berechnung von Verkehrsauskünften aus einem integrierten Netz, welches erfindungsgemäß das öffentliche Verkehrsnetz und das Individualverkehrsnetz in Verbindung bringt. Erfindungsgemäße Referenzen der Haltestellen auf die Segmente des Individualverkehrsnetzes definieren hier die Übergänge zwischen den beiden Netzen, d. h. die Schnittstelle zwischen den beiden Netzen. Eine Anforderung besteht beispielsweise darin, einen optimalen Weg von einem Punkt A zu einem Punkt B zu finden. Um einen der modernen Routensuchalgorithmen, wie z. B. nach Dijkstra, einsetzen zu können, wird aus jeder Referenz eine Kante generiert, die die Attribute des IV-Netzes erhält. Dies bedeutet, daß von einer Haltestelle, die üblicherweise innerhalb eines Segmentes liegt, zu einem Endpunkt des Segmentes eine Kante generiert wird, die von dem Routensuchalgorithmus dann verwendet werden kann. Die generierte Kante wird die Attribute des Segments erhalten, von dem sie ein Teil ist. Wichtige Attribute hierbei können beispielsweise Fahrtrichtungsinformationen sein, welche angeben, ob es sich um eine Einbahnstraße handelt oder nicht, was bedeuten würde, daß ein Benutzer von der Haltestelle aus nur in einer Richtung fahren kann, wenn er im Auto unterwegs ist, daß er sich jedoch in beiden Richtungen bewegen kann, wenn er als Fußgänger unterwegs ist. Das erfindungsgemäße Verfahren zum Erzeugen von Verkehrsinformationen liefert somit unter Verwendung der Referenzen des öffentlichen Verkehrsnetzes auf das Individualverkehrsnetz Verkehrsauskünfte auf flexible Art und Weise unter Verwendung moderner Algorithmen.

Individualverkehrsdaten können besonders in Ballungsgebieten in sehr hoher Auflösung vorliegen. Die Polygonpunktfolge eines Segments einer Straße kann Punkte im Abstand von 10 cm aufweisen. Für bestimmte Anwendungen ist jedoch eine derart hohe Auflösung nicht erforderlich, sondern es genügt, wenn sich die Mittellinie der Straße in einem Korridor von beispielsweise 10 m Breite bewegt. Zur Reduzierung der beträchtlichen Datenmengen kann ein Filterverfahren durchgeführt werden, um in den entsprechenden Segmenten mehrere Polygonpunkte auszufiltern, um eine bessere Handhabbarkeit zu erreichen. Dies ist aufgrund der Referenzierung der vorliegenden Erfindung ohne weiteres möglich, da die Referenzierung nicht auf Polygonpunkte und damit geografische Koordinaten bezogen ist, sondern lediglich auf Segmentkennungen und Anfangs- und Endpunkte von Segmenten.

Zusammenfassend läßt sich also feststellen, daß die Verbindung der Knoten-Kantenmodelle von Netzen des öffentlichen Verkehrs und des Individualverkehrs über geografische Referenzen statt über Koordinaten sowohl bezüglich der Haltestellen als auch der Streckenverläufe erfolgt. Damit ergibt sich ein leicht handhabbares Zuordnungsverfahren. Das Ergebnis erlaubt die Nutzung der Individualverkehrsdaten in Anwendungen für den öffentlichen Verkehr (Darstellung, Betriebsleistung), und die Berechnung multimodaler Verkehrsauskünfte in integrierten Netzen.

## Patentansprüche

1. Verfahren zum Erzeugen einer integrierten Darstellung von Verkehrswegen und Haltestellen für öffentliche Verkehrsmittel:
(a) Bereitstellen einer ersten Datenmenge, die geografische Verkehrswege beschreibt, wobei jeder Verkehrsweg durch eine Abfolge von Segementen (10, 12, 14, 16, 18) definiert ist;
(b) Bereitstellen einer zweiten Datenmenge, die Haltestellen (20a, 20b) von öffentlichen Verkehrsmitteln darstellt;
(c) Identifizieren eines Segments (12), dem eine bestimmte Haltestelle (20a) zuzuordnen ist;
(d) Berechnen des Abstands der bestimmten Haltestelle (20a) von einem Endpunkt (12a, 12b) des identifizierten Segments (12);
(e) Eintragen einer Referenz der bestimmten Haltestelle (20a) auf das identifizierte Segment (12) in eine dritte Datenmenge, wobei die Referenz eine Segmentkennung (ID) und den Abstand der bestimmten Haltestelle (20a) von einem Endpunkt (12a, 12b) des identifizierten Segments (12) aufweist;
(f) Wiederholen der Schritte (c) bis (e) für die in der zweiten Datenmenge dargestellten Haltestellen (20a, 20b), wodurch die dritte Datenmenge eine entsprechende Anzahl von Referenzen erhält.

2. Verfahren nach Anspruch 1, bei dem ein Segment (12) neben seiner Segmentkennung (ID) Kennungen für den Anfangs- und Endpunkt (12a, 12b) des Segments sowie eine Polygonpunktfolge aufweist, die die Geometrie des Segments beschreibt.

3. Verfahren nach Anspruch 2, bei dem jeder Punkt der Polygonpunktfolge durch geografische Längen- und Breiten-Koordinaten definiert ist.

4. Verfahren nach einem der vorhergehenden Ansprüche, bei dem ein Segment (12) ferner Attribute aufweist, die auf die Geschwindigkeitsklasse des Segments, auf den Typ des Verkehrswegs, wie z. B. Tunnel, Brücke, auf die Anzahl der Fahrspuren, auf die Art des Verkehrswegs, wie z. B. Landstraße, Fernstraße, Autobahn, Schiene, Wasserweg, auf zulässige Lasten und/oder auf Parkvorschriften hinweisen.

5. Verfahren nach einem der vorhergehenden Ansprüche, bei dem die Segmentkennungen (ID) unabhängig von geografischen Koordinaten und von der Strecken-Auflösung der ersten Datenmenge sind.

6. Verfahren nach einem der vorhergehenden Ansprüche, bei dem die Referenz zusätzlich eine Angabe über die Seite des identifizierten Segments (12) aufweist, der die bestimmte Haltestelle (20a) zugeordnet ist.

7. Verfahren nach einem der vorhergehenden Ansprüche, bei dem zumindest einige der Haltestellen (20a, 20b) für öffentliche Verkehrsmittel hierarchisch gestuft sind, derart, daß eine hierarchisch gestufte Haltestelle einen Eingangs/Ausgangs-Bereich, Bereiche für verschiedene öffentliche Verkehrsmittel und in den Bereichen Bussteige bzw. Bahnsteige sowie Parkflächen für Individualverkehrsmittel aufweist, wobei alle Elemente der Haltestelle durch Wege miteinander verbunden sind, wobei die dritte Datenmenge Referenzen von den Parkflächen für Individualverkehrsmittel und von den Eingangs/Ausgangs-Bereichen auf entsprechende Segmente der ersten Datenmenge aufweist.

8. Verfahren nach einem der vorhergehenden Ansprüche, bei dem die erste Datenmenge vorgefertigt ist und unverändert bleibt, während die zweite Datenmenge durch Referenzen auf die erste Datenmenge erweitert wird, um die dritte Datenmenge zu ergeben.

9. Verfahren nach einem der vorhergehenden Ansprüche, das mit Hilfe eines Computers mit grafischer Benutzeroberfläche ausführbar ist, auf der die erste Datenmenge in Form einer Landkarte bzw. eines Stadtplans dargestellt ist, wobei das Verfahren vor dem Schritt (c) folgenden Schritt aufweist:
Bezeichnen der Lage einer Haltestelle (20a) mittels eines grafischen Zeigegeräts in der dargestellten Landkarte bzw. dem dargestellten Stadtplan; und
wobei die Schritte (c) bis (e) von dem Computer automatisch durchgeführt werden.

10. Verfahren nach einem der vorhergehenden Ansprüche, das ferner folgenden Schritt aufweist:
Eintragen von Angaben über die Verbindung zweier Haltestellen durch ein öffentliches Verkehrsmittel als Verbindungsreferenzen in die dritte Datenmenge, wobei für jedes Segment der ersten Datenmenge, das ein öffentliches Verkehrsmittel durchfährt, eine Verbindungsreferenz mit einer Kennung dieses Segments in der dritten Datenmenge erzeugt wird.

11. Verfahren zum Erzeugen von Verkehrsinformationen, mit folgenden Schritten:
(a) Bereitstellen einer integrierten Darstellung von Verkehrswegen und Haltestellen (20a, 20b) für öffentliche Verkehrsmittel durch ein Verfahren nach einem der Ansprüche 1 bis 10; und
(b) Auswerten der integrierten Darstellung, um Verkehrsinformationen über einen Weg zu erhalten, der einen geografischen Verkehrsweg und zumindest eine Haltestelle (20a, 20b) für öffentliche Verkehrsmittel umfaßt, wobei bei einem Übergang zwischen dem geografischen Verkehrsweg und der zumindest einen Haltestelle (20a, 20b) die der zumindest einen Haltestelle zugeordnete Referenz aus der dritten Datenmenge verwendet wird.

12. Verfahren nach Anspruch 11, bei dem die integrierte Darstellung durch ein Verfahren nach Anspruch 10 erzeugt ist, und bei dem die Verkehrsinformationen Liniennetzpläne sind, wobei der Schritt (b) ferner folgende Schritte aufweist:
grafisches Darstellen der geografischen Verkehrswege, die durch die erste Datenmenge beschrieben sind;
grafisches Darstellen der Verkehrsinformationen durch Zeichnen der Haltestellen (20a, 20b) an durch die Referenzen bestimmten Plätzen in den entsprechenden Segementen (10, 12, 14, 16, 18) und durch Zeichnen von Verbindungslinien zwischen den Haltestellen (20a, 20b) durch Markieren der Segmente zwischen den Haltestellen (20a, 20b), auf die durch die Verbindungsreferenzen verwiesen wird.

13. Verfahren nach Anspruch 11, bei dem die integrierte Darstellung durch ein Verfahren nach Anspruch 10 erzeugt ist, und bei dem die Verkehrsinformationen Betriebsleistungen sind, wobei der Schritt (b) ferner folgende Schritte aufweist:
Ermitteln der von einer Linie durchfahrenen Segmente unter Verwendung der Verbindungsreferenzen und der Referenzen der Anfangs- und Endhaltestelle;
Berechnen der Von der Linie durchfahrenen Wegstrecke durch Aufaddieren der Längen der entsprechenden Segmente sowie der Teilsegmente, in denen sich die Anfangs- und die Endhaltestelle befinden.

14. Verfahren nach Anspruch 11, bei dem die Verkehrsinformationen multimodale Verkehrsauskünfte sind, und bei dem der Schritt des Auswertens folgende Schritte aufweist:
Erfassen eines Startpunkts;
Erfassen eines Endpunkts;
Erzeugen zumindest einer Kante aus einer Referenz, die sich von dem durch die Referenz bezeichneten Punkte innerhalb des Segments zu einem Endpunkt des Segments erstreckt;
Anwenden eines Routensuchalgorithmus auf das integrierte Netz, das aus Segementen (10, 12, 14, 16, 18) und der zumindest einen erzeugten Kante besteht, um eine erwünschte Verbindung vom Startpunkt zum Endpunkt zu erhalten.

15. Verfahren nach Anspruch 14, bei dem einer erzeugten Kante ein Attribut des Segments zugeordnet wird, von dem die Kante ein Teil ist.

16. Verfahren nach Anspruch 11, bei dem sich die Verkehrsinformationen auf Berührungspunkte unterschiedlicher öffentlicher Verkehrsnetze beziehen, und bei dem der Schritt (b) ferner folgende Schritte aufweist:
Untersuchen zweier dritter Datenmengen, die zwei verschiedene öffentliche Verkehrsnetze beschreiben, auf Referenzen auf ein und dasselbe Segment; und
Identifizieren der Haltestellen (20a, 20b), die sich auf das eine Segment beziehen, als Umsteigepunkte zwischen den Netzen.

17. Verfahren nach Anspruch 16, bei dem ein weiteres Kriterium bei der Identifikation als Umsteigepunkte im Abstand zwischen zwei Haltestellen (20a, 20b) besteht.

18. Verfahren nach einem der Ansprüche 11 bis 17, das vor dem Schritt (b) ferner folgenden Schritt aufweist:
Filtern der Datenmenge durch Reduzieren der Auflösung innerhalb eines Segments.
